# EUROPÄISCHE PATENTANMELDUNG

(11) **EP 4 340 472 A1**
(43) Veröffentlichungstag der Anmeldung: **20.03.2024**
(21) Anmeldenummer: 23195969.3
(22) Anmeldetag: 07.09.2023
(51) Int. Cl.: H04W 52/36, H04W 52/14

(54) **ADAPTIVES ANTENNENSYSTEM FÜR EIN MOBILFUNKNETZ UND BETRIEBSVERFAHREN**

(30) Priorität: 16.09.2022 DE 102022123807
(71) Anmelder: Deutsche Telekom AG, 53113 Bonn (DE)
(72) Erfinder: KELLER, Stefan, 78662 Bösingen (DE); SCHMIDT, Peter, 66133 Saarbrücken (DE)
(74) Vertreter: RDL Patentanwälte PartG mbB

(57) **Zusammenfassung**

Verfahren zum Betreiben eines Antennensystems eines Mobilfunknetzes, bei dem ein Steuermodul eines Antennensystems eine Sendeleistung einer Antenne des Antennensystems einstellt, Antennensystem für ein Mobilfunknetz und Computerprogrammprodukt.

## Beschreibung

Die Erfindung betrifft ein Verfahren zum Betreiben eines Antennensystems eines Mobilfunknetzes, bei dem ein Steuermodul eines Antennensystems eine Sendeleistung einer Antenne des Antennensystems einstellt. Ferner betrifft die Erfindung ein Antennensystem für ein Mobilfunknetz und ein Computerprogrammprodukt.

Ein Antennensystem eines Mobilfunknetzes emittiert während eines normalen Betriebs eine elektromagnetische Strahlung. Für das Antennensystem ist die fachübliche Bezeichnung Basissendeempfängerstation (Base Transceiver Station, BTS) gebräuchlich.

Die emittierte elektromagnetische Strahlung nimmt mit einem zunehmenden Abstand von dem Antennensystem im Wesentlichen quadratisch ab. Allerdings kann die elektromagnetische Strahlung eine Gesundheit einer Person, die in einem von dem Antennensystem bestimmten Gefährdungsbereich angeordnet ist, beeinträchtigen, d.h. der Gesundheit der Person schaden.

Entsprechend können nationale Vorschriften verlangen, dass ein Betreiber eines Antennensystems einen Schutz von Personen vor der emittierten elektromagnetischen Strahlung nachweisen muss. Der Nachweis ist beispielsweise in Deutschland durch die Verordnung über das Nachweisverfahren zur Begrenzung elektromagnetischer Felder (BEMFV) geregelt. Die zugehörigen Grenzwerte gehen aus der 26. Verordnung (BlmSchV) zum Bundesimmissionsschutzgesetz (BlmSchG) hervor. Die BEMFV verwendet für den von Personen freizuhaltenden Gefährdungsbereich den Begriff "kontrollierbarer Bereich".

Zum Bestimmen einer Größe des Gefährdungsbereichs, d.h. des kontrollierbaren Bereichs, wird ein isotropes Emittieren von elektromagnetischer Strahlung mit einem maximal möglichen Antennengewinn angenommen. Mit anderen Worten wird sicherheitshalber von einer maximal möglichen Gefährdung (Worst-Case-Szenario) ausgegangen.

Die nationalen Vorschriften können einen geeigneten Standort eines Antennensystems verbieten, wenn an dem Standort bei einer akzeptablen Sendeleistung kein Gefährdungsbereich zuverlässig von Personen freigehalten werden kann, oder zumindest ein Betreiben eines Antennensystems an einem geeigneten Standort hinsichtlich einer zulässigen Sendeleistung des Antennensystems einschränken, wenn an dem Standort der Gefährdungsbereich bei einer maximalen Sendeleistung des Antennensystems nicht zuverlässig von Personen freigehalten werden kann.

Die zugehörigen Planungs- und Genehmigungsverfahren gehen mit einem hohen Zeit- und Kostenaufwand einher und können eine offizielle Vermessung der Strahlenbelastung innerhalb einer Umgebung des Antennensystems umfassen. Insbesondere können spezielle konstruktive Vorrichtungen in der Umgebung notwendig sein, um Personen an einem Eindringen in den Gefährdungsbereich zu hindern. Jede spätere Änderung des Antennensystems kann ein entsprechendes Anpassen der speziellen baulichen Vorrichtungen erfordern.

Es ist daher eine Aufgabe der Erfindung, ein Verfahren zum Betreiben eines Antennensystems eines Mobilfunknetzes vorzuschlagen, das ein Inbetriebnehmen des Antennensystems vereinfacht, mit geltenden Vorschriften im Einklang ist und ein Potential eines Standorts des Antennensystems möglichst voll ausschöpft.

Ein Gegenstand der Erfindung ist ein Verfahren zum Betreiben eines Antennensystems eines Mobilfunknetzes, bei dem ein Antennensystem eines Mobilfunknetzes mit einer Antenne und einem mit der Antenne funktional verbundenen Steuermodul bereitgestellt wird und das Steuermodul des Antennensystems eine Sendeleistung der Antenne einstellt. Die Antenne emittiert während eines Betriebs des Antennensystems eine elektromagnetische Strahlung. Im Sinne der Erfindung ist der Begriff "Antenne" als die Komponente des Antennensystems zu verstehen, die mit einer von dem Steuermodul eingestellten Sendeleistung eine elektromagnetische Strahlung emittiert. Das Emittieren der elektromagnetischen Strahlung kann ein Erzeugen eines statischen elektromagnetischen Felds und ein Senden von elektromagnetischen Wellen umfassen. Solche Antennensysteme sind weit verbreitet, was mit vielen Anwendungsmöglichkeiten der Erfindung einhergeht.

Erfindungsgemäß wird das Antennensystem mit einem Sensor bereitgestellt, erfasst der Sensor eine Umgebung des Antennensystems, stellt zu der erfassten Umgebung korrespondierende Umgebungsdaten bereit und stellt die Sendeleistung der Antenne abhängig von den erfassten Umgebungsdaten in Echtzeit automatisch ein. Die Umgebung umfasst einen Gefährdungsbereich des Antennensystems. Das Einstellen der Sendeleistung ermöglicht ein Anpassen des Gefährdungsbereichs des Antennensystems an die Umgebung.

Mit anderen Worten passt sich das Antennensystem selbsttätig und praktisch verzögerungsfrei an Variationen der sensorisch erfassten Umgebung an. Eine Variation der Umgebung kann eine dauerhafte Änderung der Umgebung, beispielsweise durch Baumaßnahmen innerhalb der Umgebung, und eine vorübergehende Änderung der Umgebung, beispielsweise durch eine Anwesenheit einer Person oder eines großen Tieres in der Umgebung, umfassen. Das Anpassen des Antennensystems während des Betriebs vereinfacht ein Inbetriebnehmen des Antennensystems, gewährleistet eine Konformität mit geltenden Vorschriften und schöpft ein Potential eines Standorts des Antennensystem voll aus.

Bevorzugt erkennt das Steuermodul ein in der erfassten Umgebung angeordnetes Objekt oder eine in der erfassten Umgebung angeordnete Person, ermittelt einen Abstand des Objekts oder der Person zu dem Antennensystem und stellt die Sendeleistung abhängig von dem ermittelten Abstand ein. Beispielsweise werden Gebäude, Fassaden von Gebäuden, Fenster von Gebäuden, Masten, Bäume und dergleichen jeweils als ein Objekt erfasst. Alternativ zu der Person kann auch ein Tier erfasst werden. Jedoch können Tiere unberücksichtigt bleiben, deren Größe kleiner ist als eine vorbestimmte Minimalgröße, d.h. nur gro-ße Tiere bewirken ein abstandsabhängiges Einstellen der Sendeleistung.

Das Erkennen der Person umfasst vorteilhaft ein kontinuierliches Überwachen der Umgebung. Eine in der Umgebung angeordnete Person ändert die Umgebung vorübergehend, d.h. ausschließlich während einer Anwesenheit der Person in der Umgebung. Die Person bzw. das große Tier kann zufällig und unabsichtlich in der Umgebung angeordnet sein. Beispielsweise kann die Person als ein Zuschauer einer Veranstaltung auf einen in der Umgebung angeordneten Mast oder Baum geklettert sein.

Die Person bzw. das große Tier ist das Zielsubjekt des Betriebsverfahrens. Insofern verringert das kontinuierliche sensorische Überwachen der Umgebung eine Gefährdung einer Gesundheit der Person bzw. des großen Tiers. In Bezug auf die Person bzw. das große Tier bedeutet "in Echtzeit" eine Verzögerung von weniger als 1 Sekunde.

Das Erkennen des Objekts umfasst günstigerweise ein wiederholtes Überwachen der Umgebung. Das Objekt ist ein statischer Teil der Umgebung, d.h. das Objekt ist gegenüber der Person während einer längeren Zeitspanne in der Umgebung angeordnet. Infolgedessen braucht die Umgebung zum Erkennen eines Objekts nicht kontinuierlich überwacht werden. Abgesehen davon kann das Erkennen des Objekts verglichen mit dem Erkennen der Person aufwändiger sein, wenn eine Mehrzahl von Objekten in der Umgebung angeordnet ist. Das lediglich wiederholte Überwachen der Umgebung ermöglicht infolgedessen einen geringen Betriebsaufwand des Antennensystems.

Das wiederholte Überwachen kann bei einer Inbetriebnahme des Antennensystems erstmals und nach der Inbetriebnahme des Antennensystems regelmäßig einmal täglich erfolgen. Durch das tägliche Wiederholen werden bauliche Vorrichtungen zeitnah erkannt. Eine Wiederholung des Überwachens kann als ein Komplett-Scan bezeichnet werden und eine Dauer von ca. 5 Minuten aufweisen.

Das Einstellen der Sendeleistung umfasst bevorzugt ein Berechnen einer von der Antenne in dem ermittelten Abstand erzeugten Feldstärke abhängig von der Sendeleistung und einer Freiraumdämpfung und ein Vergleichen der berechneten Feldstärke mit einer vorbestimmten maximalen Feldstärke. Die vorbestimmte maximale Feldstärke kann anhand von offiziellen Grenzwerttabellen ermittelt werden. Wenn die berechnete erzeugte Feldstärke im Abstand einer Person bzw. eines großen Tiers die vorbestimmte maximale Feldstärke überschreitet, kann das Einstellen der Sendeleistung ein Reduzieren der Sendeleistung umfassen. Wenn die berechnete erzeugte Feldstärke im Abstand einer Person bzw. eines großen Tiers die vorbestimmte maximale Feldstärke unterschreitet, kann das Einstellen der Sendeleistung ein Erhöhen der Sendeleistung umfassen.

Vorteilhaft erzeugt das Steuermodul ein jedes erkannte Objekt umfassendes statisches dreidimensionales Umgebungsmodell. Das dreidimensionale Umgebungsmodell kann abstands-, richtungs- und sendeleistungsabhängige berechnete Feldstärken umfassen. Das dreidimensionale Umgebungsmodell erhöht eine Anpassungseffizienz des Antennensystems.

Das Einstellen der Sendeleistung kann ein isotropes Reduzieren der Sendeleistung oder ein gerichtetes Reduzieren der Sendeleistung umfassen. Das isotrope, d.h. winkelunabhängige, Reduzieren der Sendeleistung ist einfach zu implementieren. Das gerichtete, d.h. winkelabhängige, Reduzieren der Sendeleistung, kann dagegen lediglich die Sendeleistung für einen einer Person bzw. einem großen Tier zugeordneten Raumwinkelbereich reduzieren und die Sendeleistung für den komplementären Raumwinkelbereich nicht reduzieren, d.h. beibehalten. Auf diese Weise wird ein Potential des Standorts des Antennensystems optimal ausgeschöpft.

In einer Ausführungsform umfasst das Einstellen der Sendeleistung ein Deaktivieren der Antenne, wenn das Steuermodul und/oder der Sensor eine Fehlfunktion aufweisen. Das Deaktivieren der Antenne ist eine letzte Sicherheitsmaßnahme, um jede von dem Antennensystem ausgehende Gesundheitsgefahr auszuschließen.

Die Sendeleistung wird günstigerweise in einem n78-Frequenzband eingestellt. Das n78-Frequenzband ist für 5G NR (Fifth Generation New Radio)-Mobilfunknetze spezifiziert. Für ältere Antennensysteme, die herkömmlich in einem Frequency Division Duplex (FDD)-Verfahren betrieben werden, wird die Sendeleistung in entsprechenden Frequenzbändern eingestellt.

Ein weiterer Gegenstand der Erfindung ist ein Antennensystem für ein Mobilfunknetz, das eine Antenne und ein mit der Antenne funktional verbundenes Steuermodul umfasst. Die Antenne ist bevorzugt als ein Antennenarray ausgebildet oder umfasst eine Mehrzahl von Antennenarrays. Unter einem Antennenarray ist wie üblich eine flächige, insbesondere matrixförmige, Anordnung einer Mehrzahl von Antennendipolen zu verstehen. Die mehreren Antennendipole ermöglichen ein gerichtetes Abstrahlen einer Sendeleistung der Antenne, ein sogenanntes Beamforming, d.h. in einem von dem Antennensystem definierten Raumwinkelbereich wird ein Gewinn (Gain) der Antenne konzentriert. Raumwinkelbereiche des Antennensystems können als Sektoren bezeichnet werden. Das Steuermodul ist ausgebildet, ein Emittieren von elektromagnetischer Strahlung durch die Antenne zu steuern.

Erfindungsgemäß umfasst das Antennensystem einen mit dem Steuermodul funktional verbundenen Sensor und ist konfiguriert, ein Verfahren nach einer Ausführungsform der Erfindung auszuführen. Der Sensor ermöglicht dem Steuermodul, eine Umgebung des Antennensystems zu erfassen und ein Emittieren von elektromagnetischer Strahlung angepasst an die erfasste Umgebung zu steuern, d.h. einen Gefährdungsbereich des Antennensystems in Echtzeit automatisch an die erfasste Umgebung anzupassen.

Bevorzugt ist der Sensor als eine optische Kamera, eine Infrarot-Kamera und/oder ein LIDAR-System ausgebildet. Die optische Kamera stellt ein Bild der Umgebung bereit und ermöglicht ein Erkennen eines in der Umgebung angeordneten Objekts mittels eines Mustererkennungsalgorithmus. Die Infrarot-Kamera stellt ein Wärmebild der Umgebung bereit und ermöglicht ein Erkennen einer in der Umgebung angeordneten Person bzw. eines in der Umgebung angeordneten Tiers. Das LIDAR (Light Detection and Ranging)-System ermöglicht ein Ermitteln eines Abstands eines Objekts oder einer Person zu dem Antennensystem. Selbstverständlich ermöglicht jeder aufgelistete Sensor jeweils auch die Funktionen der verbleibenden Sensoren, zumindest in einem geringeren Umfang bzw. mit einer geringeren Genauigkeit.

Vorteilhaft umfasst das Steuermodul ein künstliches neuronales Netz. Das künstliche neuronale Netz implementiert eine künstliche Intelligenz, Kl, (Artificial Intelligence, AI), welche nach einer Trainingsphase eine hohe Genauigkeit im Erkennen von Objekten oder Personen bzw. großen Tieren erreicht. Insbesondere kann das künstliche neuronale Netz über eine zu definierende Schnittstelle zu dem Steuermodul technische Parameter des Antennensystems wie eine Höhe des Antennensystems über Grund, einen Antennentyp, ein Frequenzband der emittierten elektromagnetischen Strahlung, eine maximale Sendeleistung der Antenne, einen maximalen Gewinn der Antenne und dergleichen empfangen.

Die Antenne kann als eine massive MIMO-Antenne ausgebildet sein. Die massive MIMO (Multiple Input Multiple Output)-Antenne umfasst eine Mehrzahl von Antennendipolen und wird in Antennensystemen für 5G (Fifth Generation)-Mobilfunknetze verbaut. Die massive MIMO-Antenne umfasst 8 bis 1.024 Antennendipole. Dagegen umfasst eine herkömmliche MIMO-Antenne zwischen 2 bis 4 Antennendipole. Die massive MIMO-Antenne unterstützt ein zeitgleiches Emittieren von unterschiedlicher elektromagnetischer Strahlung und also parallele Verbindungen des Mobilfunknetzes zu einer Mehrzahl von unterschiedlichen Endgeräten.

In einer Ausführungsform umfasst das Antennensystem eine Mehrzahl von Antennen und/oder Sensoren. Die mehreren Antennen können sich hinsichtlich einer Ausrichtung (horizontal, vertikal) und/oder einer Anzahl von Antennendipolen unterscheiden. Die Sensoren können sich hinsichtlich einer Empfindlichkeit und/oder eines erfassbaren Frequenzbereichs unterscheiden.

Noch ein Gegenstand der Erfindung ist ein Computerprogrammprodukt, umfassend ein digitales Speichermedium mit einem Programmcode. Das digitale Speichermedium kann als eine Compact Disk (CD), eine Digital Versatile Disk (DVD), ein USB (Universal Serial Bus)-Stick, eine Festplatte (Hard Drive, HD), ein Speicherchip, beispielsweise ein RAM (Random Access Memory)-Chip, ein über das Internet zugänglicher Cloudspeicher und dergleichen ausgebildet sein.

Erfindungsgemäß veranlasst der Programmcode eine Rechenvorrichtung dazu, als das Steuermodul ein Verfahren nach einer Ausführungsform der Erfindung auszuführen, wenn der Programmcode von einem Prozessor der Rechenvorrichtung ausgeführt wird. Durch das Computerprogrammprodukt wird die Rechenvorrichtung ein Steuermodul eines Antennensystems nach einer Ausführungsform der Erfindung.

Ein wesentlicher Vorteil des erfindungsgemäßen Verfahrens besteht darin, dass ein Inbetriebnehmen eines Antennensystems einfach ist, das in Betrieb genommene mit geltenden Vorschriften im Einklang ist und ein Potential eines Standorts des Antennensystems möglichst voll ausschöpft wird. Dank dem erfindungsgemäßen Verfahren sind Zeit und Kosten einer Inbetriebnahme eines Antennensystems gering.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben. Es zeigt
Fig. 1 ein Antennensystem nach einer Ausführungsform der Erfindung;
Fig. 2 eine Umgebung des in Fig. 1 gezeigten Antennensystems.

In der Zeichnung sind korrespondierende Merkmale mit identischen Bezugszeichen versehen.

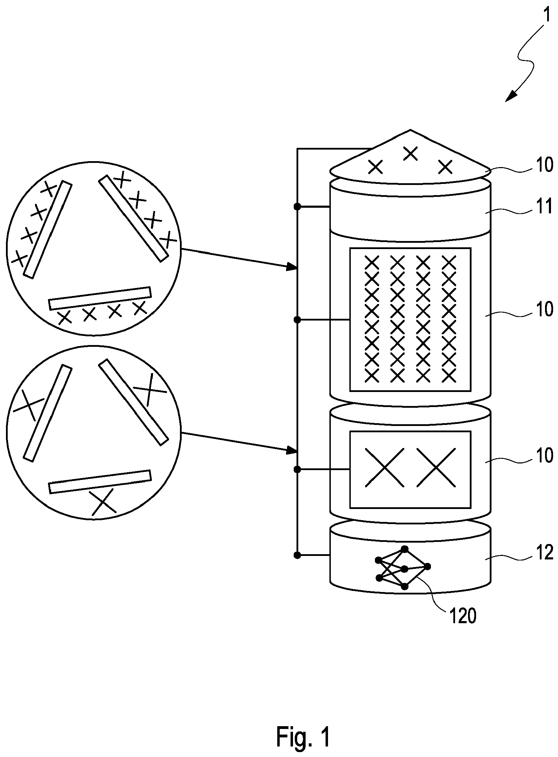

Fig. 1 zeigt ein Antennensystem 1 nach einer Ausführungsform der Erfindung. Das Antennensystem 1 ist für ein Mobilfunknetz geeignet und umfasst eine Antenne 10, einen Sensor 11 und ein mit der Antenne 10 und dem Sensor 11 funktional verbundenes Steuermodul 12.

Der Sensor 11 kann als eine optische Kamera, eine Infrarot-Kamera und/oder ein LIDAR-System ausgebildet sein. Die Antenne 10 ist bevorzugt als eine massive MIMO-Antenne ausgebildet. Idealerweise umfasst das Antennensystem 1 eine Mehrzahl von Antennen 10 und/oder Sensoren 11.

Das Steuermodul 12 kann ein künstliches neuronales Netz 120 umfassen. Insbesondere ist das Steuermodul 12 als eine Rechenvorrichtung mit einem Programmcode ausgebildet. Der Programmcode veranlasst die Rechenvorrichtung dazu, als das Steuermodul 12 ein nachfolgend beschriebenes Verfahren auszuführen, wenn der Programmcode von einem Prozessor der Rechenvorrichtung ausgeführt wird. Der Programmcode gehört zu einem Computerprogrammprodukt, das ein digitales Speichermedium mit dem Programmcode umfasst.

Das Antennensystem 1 ist konfiguriert, zum Betreiben des Antennensystems eines Mobilfunknetzes ein Verfahren nach einer Ausführungsform der Erfindung wie folgt auszuführen.

Das Antennensystem 1 des Mobilfunknetzes mit der Antenne 10, dem Sensor 11 und dem mit der Antenne 10 und dem Sensor 11 funktional verbundenen Steuermodul 12 wird bereitgestellt.

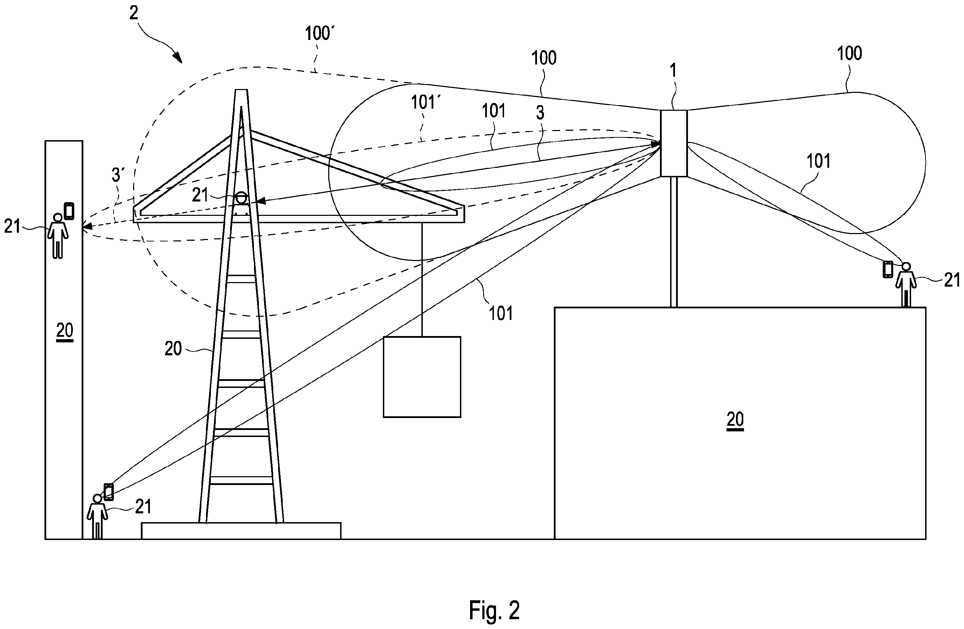

Fig. 2 zeigt eine Umgebung des in Fig. 1 gezeigten Antennensystems 1. Der Sensor 11 erfasst die Umgebung 2 des Antennensystems 1 und stellt zu der erfassten Umgebung 2 korrespondierende Umgebungsdaten bereit. Das Steuermodul 12 kann ein in der erfassten Umgebung 2 angeordnetes Objekt 20 oder eine in der erfassten Umgebung 2 angeordnete Person 21 erkennen und einen Abstand 3, 3' des Objekts 20 oder der Person 21 zu dem Antennensystem 1 ermitteln.

Das Erkennen der Person 21 umfasst vorteilhaft ein kontinuierliches Überwachen der Umgebung 2. Das Erkennen des Objekts 20 umfasst idealerweise ein wiederholtes Überwachen der Umgebung 2, das bei einer Inbetriebnahme des Antennensystems 1 erstmals und nach der Inbetriebnahme des Antennensystems 1 regelmäßig einmal täglich erfolgt. Das Steuermodul 12 erzeugt bevorzugt ein jedes erkannte Objekt 2 umfassendes statisches dreidimensionales Umgebungsmodell.

Das Steuermodul 12 des Antennensystems 1 stellt eine Sendeleistung der Antenne 10 abhängig von den erfassten Umgebungsdaten in Echtzeit automatisch ein. Die Sendeleistung kann in einem n78-Frequenzband eingestellt werden.

Vorteilhaft stellt das Steuermodul 12 die Sendeleistung abhängig von dem ermittelten Abstand 3, 3' ein. Das Einstellen der Sendeleistung kann ein Berechnen einer von der Antenne 10 in dem ermittelten Abstand 3, 3' erzeugten Feldstärke abhängig von der Sendeleistung und einer Freiraumdämpfung und ein Vergleichen der berechneten Feldstärke mit einer vorbestimmten maximalen Feldstärke umfassen.

Das Einstellen der Sendeleistung kann ferner ein isotropes Reduzieren der Sendeleistung oder ein gerichtetes Reduzieren der Sendeleistung und/oder ein Deaktivieren der Antenne 10 umfassen, wenn das Steuermodul 12 und/oder der Sensor 11 eine Fehlfunktion aufweisen.

Wie in Figur 2 beispielhaft und nicht einschränkend gezeigt ist, sind ein Objekt 20, hier ein Kran, und eine in dem Objekt 20 angeordnete Person 21, hier ein Kranführer, in einem Abstand 3 zu dem Antennensystem 1 angeordnet. Der Abstand 3 ist geringer als ein Abstand 3' einer in einem weiteren Objekt 20, hier einem Hochhaus, angeordneten weiteren Person 21 zu dem Antennensystem 1.

Vor dem Anordnen des Objekts 20 in der Umgebung 2 ist eine Sendeleistung des Antennensystems 1 derart eingestellt, dass die weitere Person 21 innerhalb einer Reichweite eines Verkehrsstrahls 101' und außerhalb eines zu dem Verkehrsstrahl 101' korrespondierenden Gefährdungsbereichs 100' angeordnet ist.

Nach dem Anordnen des Objekts 20 in der Umgebung 2 ist eine Sendeleistung des Antennensystems 1 automatisch derart reduziert, dass die weitere Person 21 innerhalb einer Reichweite eines Verkehrsstrahls 101 und außerhalb eines zu dem Verkehrsstrahl 101 korrespondierenden Gefährdungsbereichs 100 angeordnet ist.

### Bezugszeichenliste

- 1: Antennensystem
- 10: Antenne
- 100: Gefährdungsbereich
- 101: Verkehrsstrahl
- 100': Gefährdungsbereich
- 101': Verkehrsstrahl
- 11: Sensor
- 12: Steuermodul
- 120: künstliches neuronales Netz
- 2: Umgebung
- 20: Objekt
- 21: Person
- 3: Abstand
- 3': Abstand

## Patentansprüche

1. Verfahren zum Betreiben eines Antennensystems (1) eines Mobilfunknetzes, bei dem
- ein Antennensystem (1) eines Mobilfunknetzes mit einer Antenne (10), einem Sensor (11) und einem mit der Antenne (10) und dem Sensor (11) funktional verbundenen Steuermodul (12) bereitgestellt wird;
- der Sensor (11) eine Umgebung (2) des Antennensystems (1) erfasst und zu der erfassten Umgebung (2) korrespondierende Umgebungsdaten bereitstellt; und
- das Steuermodul (12) des Antennensystems (1) eine Sendeleistung der Antenne (10) abhängig von den erfassten Umgebungsdaten automatisch einstellt.

2. Verfahren nach Anspruch 1, bei dem das Steuermodul (12) ein in der erfassten Umgebung (2) angeordnetes Objekt (20) oder eine in der erfassten Umgebung (2) angeordnete Person (21) erkennt, einen Abstand (3) des Objekts (20) oder der Person (21) zu dem Antennensystem (1) ermittelt und die Sendeleistung abhängig von dem ermittelten Abstand (3) einstellt.

3. Verfahren nach Anspruch 2, bei dem das Erkennen der Person (21) ein kontinuierliches Überwachen der Umgebung (2) umfasst und/oder das Erkennen des Objekts (20) ein wiederholtes Überwachen der Umgebung (2) umfasst, das bei einer Inbetriebnahme des Antennensystems (1) erstmals und nach der Inbetriebnahme des Antennensystems (1) regelmäßig einmal täglich erfolgt.

4. Verfahren nach Anspruch 2 oder 3, bei dem das Einstellen der Sendeleistung ein Berechnen einer von der Antenne (10) in dem ermittelten Abstand (3) erzeugten Feldstärke abhängig von der Sendeleistung und einer Freiraumdämpfung und ein Vergleichen der berechneten Feldstärke mit einer vorbestimmten maximalen Feldstärke umfasst.

5. Verfahren nach einem der Ansprüche 2 bis 4, bei dem das Steuermodul (12) ein jedes erkannte Objekt (2) umfassendes statisches dreidimensionales Umgebungsmodell erzeugt.

6. Verfahren nach einem der Ansprüche 1 bis 5, bei dem das Einstellen der Sendeleistung ein isotropes Reduzieren der Sendeleistung oder ein gerichtetes Reduzieren der Sendeleistung umfasst und/oder ein Deaktivieren der Antenne (10) umfasst, wenn das Steuermodul (12) und/oder der Sensor (11) eine Fehlfunktion aufweisen.

7. Verfahren nach einem der Ansprüche 1 bis 6, bei dem die Sendeleistung in einem n78-Frequenzband eingestellt wird.

8. Antennensystem (1) für ein Mobilfunknetz, das eine Antenne (10), einen Sensor (11) und ein mit der Antenne (10) und dem Sensor (11) funktional verbundenes Steuermodul (12) umfasst und konfiguriert ist, ein Verfahren nach einem der Ansprüche 1 bis 7 auszuführen.

9. Antennensystem nach Anspruch 8, bei dem der Sensor (11) als eine optische Kamera, eine Infrarot-Kamera und/oder ein LIDAR-System ausgebildet ist und/oder das Steuermodul (12) ein künstliches neuronales Netz (120) umfasst und/oder die Antenne (10) als eine massive MIMO-Antenne ausgebildet ist und/oder das Antennensystem (1) eine Mehrzahl von Antennen (10) und/oder Sensoren (11) umfasst.

10. Computerprogrammprodukt, umfassend ein digitales Speichermedium mit einem Programmcode, der eine Rechenvorrichtung dazu veranlasst, als das Steuermodul (12) ein Verfahren nach einem der Ansprüche 1 bis 7 auszuführen, wenn der Programmcode von einem Prozessor der Rechenvorrichtung ausgeführt wird.
